# EUROPÄISCHE PATENTSCHRIFT

(11) **EP 0 798 542 B1**
(45) Veröffentlichungstag und Bekanntmachung des Hinweises auf die Patenterteilung: **11.09.2002**
(21) Anmeldenummer: 97104669.3
(22) Anmeldetag: 19.03.1997
(51) Int. Cl.: G01D 5/165, B60K 26/02

(54) **Fahrpedalgeber**
Accelerator pedal position sensor
Capteur de position d'une pédale d'accélérateur

(30) Priorität: 30.03.1996 DE 19612830
(43) Veröffentlichungstag der Anmeldung: 01.10.1997
(73) Patentinhaber: Hella KG Hueck & Co., 59552 Lippstadt (DE)
(72) Erfinder: Berglar, Heinrich, 59510 Lippetal (DE)

(56) Entgegenhaltungen:
- EP-A- 0 335 094
- DE-A- 3 405 934
- US-A- 4 105 987
- US-A- 5 343 188

## Beschreibung

Die Erfindung betrifft einen Fahrpedalgeber mit einem elektrischen Sensor, welcher ein von der Position des Fahrpedales abhängiges Signal erzeugt.

Solche Fahrpedalgeber enthalten zumeist Drehsensoren, die innerhalb des Betätigungsbereiches des Fahrpedals, d.h. zwischen einer Leerlauf- und einer Vollaststellung ein zu einem Drehwinkel proportionales lineares Signal abgeben.

Bezüglich der Genauigkeit der Drehwinkelabhängigkeit des abgegebenen Signales wird dabei im allgemeinen gefordert, daß dieses innerhalb eines Toleranzbandes liegt, d.h. daß es von einem mittleren Sollwert um maximal einen vorgegebenen Wert nach oben oder unten abweicht.

Für die zwei ausgezeichneten Punkte der Fahrpedalkennlinie, die Leerlauf- und die Vollaststellung, kann sich hierbei folgendes Problem ergeben. Wird das Fahrpedal, bedingt durch die mechanische Elastizität der Fahrpedalsensoranordnung, unterhalb des Bereiches der Leerlaufstellung bzw. in den aus Toleranzgründen erforderlichen Überhubbereich jenseits der Vollaststellung bewegt, so können die Signalwerte des Sensors den für diese Punkte jeweils vorgegebenen Toleranzbereich unter- bzw. überschreiten und dieses obwohl der Sensor selbst bezüglich seiner elektrischen Eigenschaften die geforderten Toleranzen einhält.

Ebenso kann ein ungenauer Einbau zu einer Toleranzüberschreitung in der Leerlauf- oder in der Vollaststellung führen. Es stellt sich somit die Aufgabe, einen Fahrpedalgeber mit einem Sensor zu schaffen, welcher auf einfache und kostengünstige Weise herstellbar ist und der sowohl in der Leerlauf- wie auch in der Vollaststellung möglichst exakt abgeglichen werden kann und der unempfindlich gegen durch Toleranzüberschreitungen verursachte Störungen ist.

Diese Aufgabe wird erfindungsgemäß dadurch gelöst, daß der Sensor in einem Anfangsbereich und in einem Endbereich seines Verstellweges jeweils ein konstantes Signal erzeugt und daß mit dem Sensor trimmbare Bauelemente verschaltet sind, die die Werte der konstanten Signale festlegen oder beeinflußen.

Hierdurch wird auf einfache Weise sichergestellt, daß der Sensor auch im Fall eines Unterschreitens der Leerlaufstellung bzw. des Überschreitens der Vollaststellung kein Signal erzeugt, welches außerhalb der der Leerlauf- bzw. der Vollaststellung zugeordneten Toleranzbereiche liegt.

Zudem kann vorteilhafterweise mittels der trimmbaren Bauelemente der vom Sensor in der Leerlauf- bzw. Vollaststellung abgegebene Signalwert sehr genau auf die entsprechenden Sollwerte einjustiert werden.

Aus der EP 0675276 A1 ist zwar bereits ein Potentiometer bekannt, bei dem sich der Widerstandswert nur über einen Teilbereich des Stellwegs ändert. Dieses Potentiometer ist aber an den Motorsteller einer Drosselklappe angekoppelt und soll so speziell eine exakte Leerlaufregelung der Drosselklappe ermöglichen. Abgesehen von einer Problemstellung, die von der Aufgabenstellung der Erfindung vollkommen abweicht, unterscheidet sich dieses Potentiometer auch in der Ausgestaltung und Funktion, da dieses nur in einem Bereich des Verstellweges ein konstantes Signal abgibt.

DE-34 05 934 A1 offenbart einen Rückmeldepotentiometer, in welchem mittels Trimmer die Kennlinie des Rückmeldepotentiometers so verschwenkt werden kann, daß von ihr zwei Punkte geschnitten werden, deren genanes Erreichen für den jeweiligen Anwendungsfall wichtig ist.

Weitere vorteilhafte Ausgestaltungen und Weiterbildungen des erfindungsgemäßen Fahrpedalgebers gehen aus den Unteransprüchen hervor.

So ist es vorteilhaft, den die Verstellung des Fahrpedales auswertenden Sensor als Drehsensor auszubilden. Abhängig vom bevorzugten Meßverfahren sind hier verschiedene Ausführungen vorsehbar z. B. als berührungsloser und daher verschleißfreier kapazitiver Drehsensor oder auch als besonders kostengünstiger Widerstandssensor (Potentiometer).

Die Widerstandsbahn eines Potentiometers kann dabei auf besondere einfache und kostengünstige Weise als eine auf eine Leiterplatte aufgedruckte Widerstandsbahn ausgeführt werden.

Ebenso einfach können die trimmbaren Bauelemente als auf die Leiterplatte aufgedruckte Widerstände ausgebildet werden. Diese haben zudem den Vorteil, daß sie vollautomatisch mittels eines Lasers trimmbar sind. Auf besonders einfache und vorteilhafte Weise können auch die Anfangs- und Endbereiche des Sensors ausgeführt werden, in welchen dieser ein konstantes Signal erzeugt. Hierzu wird die Widerstandsbahn des Potentiometers in diesen Bereichen vorteilhafterweise einfach mit einem gut leitenden Material beschichtet oder bereits beim Bedrucken der Leiterplatte durch ein gut leitendes Material ersetzt.

Im folgenden soll ein Ausführungsbeispiel eines erfindungsgemäßen Fahrpedalgebers anhand der Zeichnung dargestellt und näher erläutert werden.

Es zeigen
- Figur 1: eine Leiterplatte, auf der die Schleiferbahnen eines Potentiometers sowie trimmbare Widerstände angeordnet sind,
- Figur 2: die Charakteristik des vom Fahrpedalgebers erzeugten elektrischen Signals in Abhängigkeit vom Betätigungswinkel des Fahrpedals.

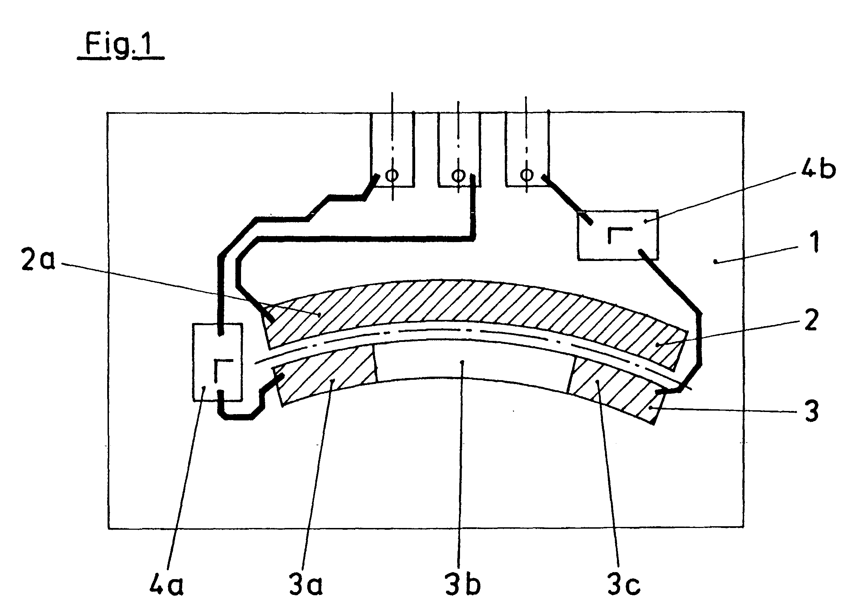

Die Figur 1 zeigt eine Leiterplatte (1) eines Fahrpedalgebers. Zwei parallele Schleiferbahnen (2, 3) bilden zusammen mit einem in der Figur nicht dargestellten Schleifer einen als Potentiometer ausgeführten Drehsensor aus. Hierzu besitzt der Schleifer eine ebenfalls nicht dargestellte Kontaktfeder, welche die beiden Schleiferbahnen (2, 3) jeweils an zwei zueinander parallel liegenden Stellen elektrisch miteinander verbindet.

Die schraffierten Bereiche (2a, 3a, 3c) der Schleiferbahnen (2, 3) besitzen hierbei einen vernachlässigbar geringen Widerstand, der Bereich (3b) hingegen einen deutlich ausgeprägten Widerstand. Die Schleiferbahn (2) wird hierzu beispielsweise mittels einer Leiterpaste auf die Leiterplatte (1) gedruckt. Die Schleiferbahn (3) wird als Widerstandsbahn (3) auf die Leiterplatte (1) gedruckt, wobei anschließend die Bereiche (3a und 3c) zusätzlich mit einem gut leitenden Material beschichtet werden.

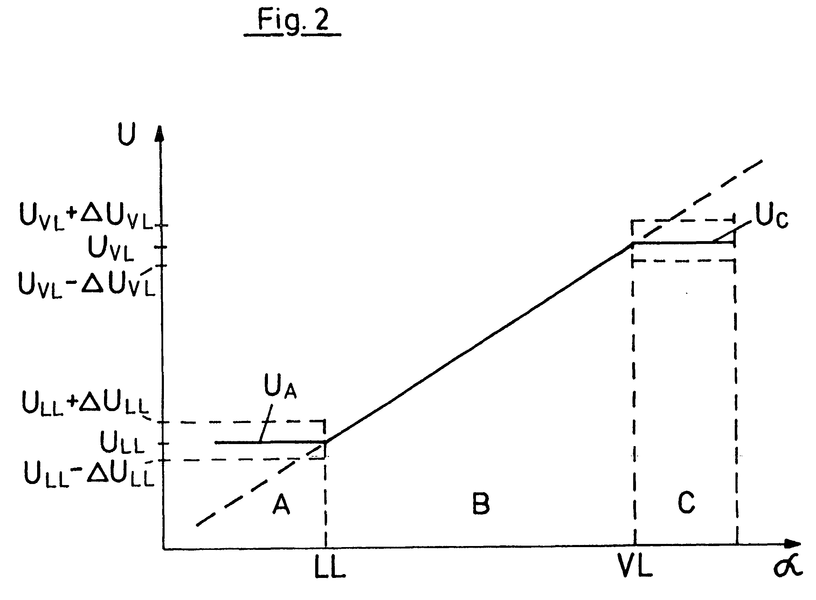

Die Charakteristik des Fahrpedalgebers ist in der Figur 2 dargestellt. Aufgetragen ist das vom Fahrpedalsensor abgegebene Signal, hier das elektrische Spannungssignal (U), gegen die Position des Fahrpedals dargestellt durch den Betätigungswinkel (α).

Zwei Positionen des Fahrpedales sind in der Figur hervorgehoben dargestellt, nämlich die Leerlaufposition (LL) und die Vollastposition (VL), welche die üblichen Anfangs- und Endpositionen des Fahrpedals markieren.

Zu diesen Positionen (LL, VL) ist jeweils ein fester Sollwert (U_{LL} bzw. U_{VL}) und zu jedem Sollwert wiederum ein gewisser Toleranzbereich (U_{LL} +/- Δ U_{LL}) bzw. (U_{VL} +/- Δ U_{VL}) vorgegeben, die von einem ordnungsgemäß funktionierenden Fahrpedalgeber in diesen Positionen einzuhalten sind. Die Sensorcharakteristik sei im Betätigungsbereich (B) zwischen der Leerlaufposition (LL) und der Vollastposition (VL) als linear angenommen.

Erstens aus Toleranzgründen und zweitens, da bei kräftiger Betätigung des Fahrpedales eine Sensorpositionierung jenseits des üblichen Betätigungsbereiches (B) möglich ist, muß jenseits der Leerlaufposition (LL) und der Vollastposition (VL) jeweils ein Anfangsbereich (A) und ein Endbereich (C) vorgegeben werden, in welchem der Sensor ebenfalls positioniert werden kann.

Bei einer einheitlich linearen Sensorcharakteristik kommt es in diesen Bereichen (A, C) sehr leicht zu einer Unter- bzw. Überschreitung der zulässigen Toleranzbereiche (U_{LL} +/- Δ U_{LL} bzw. U_{VL} +/- Δ U_{VL} ) für das Leerlaufsignal (U_{LL}) bzw. das Vollastsignal (U_{VL}).

In der Figur 2 ist dieses dargestellt durch die gestrichelten Verlängerungen des linear ansteigenden Bereiches der Sensorcharakteristik in den Anfangsbereich (A) und den Endbereich (C) hinein. Eine solche Toleranzüberschreitung interpretiert das mit dem Fahrpedalsensor verbundene Steuergerät als Fehlerzustand.

Bei dem erfindungsgemäßen Fahrpedalgeber ist nun die Sensorkennlinie im Anfangsbereich (A) und im Endbereich (C) als konstanter Signalwert (U_{A}, U_{C}) angelegt, so daß Toleranzüberschreitungen des Leerlauf- und des Vollastwertes (U_{LL}, U_{VL}) nicht auftreten können. Der Sensor besitzt dazu bei Positionierung in den Bereichen (A) und (C) einen konstanten Widerstandswert, was nach Figur 1 dadurch realisiert wird, daß die den Bereichen (A) und (C) zugeordneten Abschnitte (3a, 3c) der Widerstandsbahn (3) mit einem gut leitenden Material beschichtet sind.

Die in der Figur dargestellten trimmbaren Widerstände (4a, 4b) ermöglichen zudem, den konstanten Signalwert (U_{A}) im Bereich (A bzw. U_{C}) im Bereich (C) genau auf den Sollwert des Leerlaufsignals (U_{LL}) bzw. des Vollastsignals (U_{VL}) abzugleichen. Dieser Abgleich kann auf besonders einfache Weise und vollautomatisch mittels eines Lasers erfolgen.

### Bezugszeichenliste

### Fahrpedalgeber

- 1: Leiterplatte
- 2, 3: Schleiferbahnen
- 3: Widerstandsbahn
- 2a, 3a, 3b, 3c: Bereiche der Schleiferbahnen
- 4a, 4b: trimmbare Bauelemente (Widerstände)
- A: Anfangsbereich
- B: Betätigungsbereich
- C: Endbereich
- α: Betätigungswinkel (des Fahrpedals)
- U: Spannungssignal
- U_{A}, U_{C}: konstante Signale des Sensors
- LL: Leerlaufposition
- VL: Vollastposition
- U_{LL}: Leerlaufsignal (Sollwert)
- U_{VL}: Vollastsignal (Sollwert)
- U_{LL} +/- Δ U_{LL}: Leerlauftoleranzbereich
- U_{VL} +/- Δ U_{VL}: Vollasttoleranzbereich

## Patentansprüche

1. Fahrpedalgeber mit einem elektrischen Sensor, welcher ein von der Position des Fahrpedales abhängiges Signal erzeugt, **dadurch gekennzeichnet, daß** der Sensor in einem Anfangsbereich (A) und in einem Endbereich (C) seines Verstellweges jeweils ein konstantes Signal (U_{A}, U_{C} ) erzeugt und daß mit dem Sensor trimmbare Bauelemente (4a, 4b) verschaltet sind, die die Werte der konstanten Signale (U_{A}, U_{C} ) festlegen oder beeinflußen.

2. Fahrpedalgeber nach Anspruch 1, **dadurch gekennzeichnet, daß** der Sensor als Potentiometer ausgebildet ist.

3. Fahrpedalgeber nach Anspruch 2, **dadurch gekennzeichnet, daß** das Potentiometer mindestens eine auf eine Leiterplatte (1) aufgedruckte Schleiferbahn (2, 3) aufweist.

4. Fahrpedalgeber nach Anspruch 3, **dadurch gekennzeichnet, daß** eine der Schleiferbahnen (2, 3) als Widerstandsbahn (3) ausgebildet ist und daß der Anfangsbereich (3a) und der Endbereich (3c) der Widerstandsbahn (3) keinen oder nur einen geringen Widerstandswert aufweist.

5. Fahrpedalgeber nach Anspruch 4, **dadurch gekennzeichnet, daß** die Anfangsund Endbereiche (3a, 3c) der Widerstandsbahn (3) mittels eines gut leitenden Materials beschichtet sind oder durch ein gut leitendes Material ersetzt sind.

6. Fahrpedalgeber nach Anspruch 1, **dadurch gekennzeichnet, daß** die trimmbaren Bauelemente (4a, 4b) trimmbare Widerstände sind.

7. Fahrpedalgeber nach Anspruch 6, **dadurch gekennzeichnet, daß** die trimmbaren Widerstände (4a, 4b) auf die Leiterplatte (1) aufgedruckt sind und mittels eines Lasers getrimmt sind.

## Claims

1. An accelerator pedal transmitter comprising an electrical sensor which generates a signal depending on the position of the accelerator pedal, **characterised in that** both in a start region (A) and in an end region (C) of its setting range the sensor generates a constant signal (UA, UB), and that trimmable components (4a, 4b), which fix or influence the values of the constant signals (UA, UB), are connected to the sensor.

2. An accelerator pedal transmitter according to claim 1, **characterised in that** the sensor is constructed as a potentiometer.

3. An accelerator pedal transmitter according to claim 2, **characterised in that** the potentiometer comprises at least one sliding contact track (2, 3) which is printed on a printed board (1).

4. An accelerator pedal transmitter according to claim 3, **characterised in that** one of the sliding contact tracks (2, 3) is constructed as a resistance track (3) and that the start region (3a) and the end region (3c) of the resistance track (3) have no resistance value or have only a low resistance value.

5. An accelerator pedal transmitter according to claim 4, **characterised in that** the start and end regions of (3a, 3c) of the resistance track (3) are coated with a material of good conductivity or are replaced by a material of good conductivity.

6. An accelerator pedal transmitter according to claim 1, **characterised in that** the trimmable components (4a, 4b) are trimmable resistors.

7. An accelerator pedal transmitter according to claim 6, **characterised in that** that the trimmable resistors (4a, 4b) are printed on the printed board (1) and are trimmed by means of a laser.

## Revendications

1. Indicateur de pédale d'accélération comportant un capteur électrique, produisant un signal dépendant de la position de la pédale d'accélération, **caractérisé en ce que** le capteur produit dans une zone initiale (A) et une zone terminale (C) de sa course, un signal respectif constant (U_{A}, U_{C}) et que des modules rognables (4a, 4b) qui fixent ou influencent les valeurs des signaux constants (U_{A}, U_{C}) sont connectés au capteur.

2. Indicateur de pédale d'accélération selon la revendication 1, **caractérisé en ce que** le capteur est conçu comme un potentiomètre.

3. Indicateur de pédale d'accélération selon la revendication 2, **caractérisé en ce que** le potentiomètre possède au moins une piste de curseur (2, 3) imprimée sur une carte de circuits imprimés (1).

4. Indicateur de pédale d'accélération selon la revendication 3, **caractérisé en ce que** l'une des pistes de curseur (2, 3) est conçue comme piste de résistance (3) et que la zone initiale (3a) et la zone terminale (3c) de la piste de résistance (3) présentent une valeur de résistance nulle ou uniquement faible.

5. Indicateur de pédale d'accélération selon la revendication 4, **caractérisé en ce que** les zones initiale et terminale (3a,3c) de la piste de résistance (3) sont recouvertes d'un matériau bon conducteur ou sont remplacées par un matériau bon conducteur.

6. Indicateur de pédale d'accélération selon la revendication 1, **caractérisé en ce que** les modules rognables (4a, 4b) sont des résistances rognables.

7. Indicateur de pédale d'accélération selon la revendication 6, **caractérisé en ce que** les résistances rognables (4a, 4b) sont imprimées sur la carte de circuits imprimés (1) et rognées par laser.
